# FASCICULE DE BREVET EUROPEEN

(11) **EP 3 590 843 B1**
(45) Date de publication et mention de la délivrance du brevet: **26.05.2021**
(21) Numéro de dépôt: 19183330.0
(22) Date de dépôt: 28.06.2019
(51) Int. Cl.: B64D 29/00, B64D 33/02, F02C 7/045, F02C 7/24, B32B 5/02, B32B 3/08, B32B 3/12, B32B 3/26, B32B 7/04, B26F 1/00

(54) **PROCEDE DE FABRICATION D'UN PANNEAU ACOUSTIQUE COMPORTANT DES INSERTS**
HERSTELLUNGSVERFAHREN EINES SCHALLDÄMMPANEELS MIT EINSÄTZEN
METHOD FOR MANUFACTURING AN ACOUSTIC PANEL COMPRISING INSERTS

(30) Priorité: 04.07.2018 FR 1856166
(43) Date de publication de la demande: 08.01.2020
(73) Titulaire: AIRBUS OPERATIONS (S.A.S.), 31060 Toulouse (FR)
(72) Inventeur: MENAY, Hassan, 31060 TOULOUSE Cedex 9 (FR); PORTE, Alain, 31060 TOULOUSE Cedex 9 (FR); LALANE, Jacques, 31060 TOULOUSE Cedex 9 (FR); RICCOBENE, Théo, 31060 TOULOUSE Cedex 9 (FR)
(74) Mandataire: Gicquel, Olivier Yves Gérard

(56) Documents cités:
- FR-A1- 2 839 075
- FR-A1- 2 942 166
- FR-A1- 3 039 147
- FR-A1- 3 039 148

## Description

### DOMAINE TECHNIQUE

La présente invention concerne un procédé de fabrication d'un panneau acoustique qui comporte des inserts, un panneau acoustique obtenu par un tel procédé de fabrication, une nacelle d'aéronef comportant un tel panneau acoustique, un aéronef comportant au moins une telle nacelle.

### ETAT DE LA TECHNIQUE ANTERIEURE

Un système de propulsion d'aéronef comporte un moteur, en particulier un turboréacteur, et une nacelle qui entoure le moteur. Pour absorber les bruits générés par le moteur, la nacelle comporte des panneaux acoustiques. Chaque panneau acoustique comporte une structure composite sur laquelle est fixée successivement une structure en nid d'abeilles et une peau arrière.

La structure composite est orientée vers le flux d'air qui traverse la nacelle et elle est percée de trous afin de permettre le passage des ondes acoustiques vers la structure en nid d'abeilles.

Bien qu'un tel panneau acoustique donne entière satisfaction, les nouvelles générations de moteurs génèrent des bruits avec des fréquences plus basses. Pour absorber de telles fréquences, il est nécessaire de réduire le diamètre des trous. Le perçage de la structure composite polymérisée avec des outils est limité à des trous de 1 mm de diamètre et le perçage peut en outre entraîner un sectionnement des fibres composites de la structure composite.

Afin d'améliorer l'absorption de ces nouvelles fréquences, il est souhaitable de trouver un procédé qui permet de réaliser un panneau acoustique avec une nouvelle architecture et ayant en particulier des trous de très faible diamètre.

FR 3 039 148 A1 divulgue un procédé de fabrication d'un panneau acoustique comportant les étapes suivantes: une étape de réalisation au cours de laquelle une structure composite est réalisée; une étape de fourniture au cours de laquelle des picots sont fournis et mis en place dans la structure composite: une étape de polymérisation au cours de laquelle la structure composite avec les inserts est polymérisée; une étape de retrait (frittage) au cours de laquelle les picots disparaissent; une première étape d'assemblage au cours de laquelle une structure en nid d'abeilles est fixée à la structure composite polymérisée, et une deuxième étape d'assemblage au cours de laquelle une peau arrière est fixée à la structure en nid d'abeilles.

### EXPOSE DE L'INVENTION

Un objet de la présente invention est de proposer un procédé de fabrication d'un panneau acoustique qui permet d'absorber des ondes acoustiques présentant des fréquences basses.

A cet effet, est proposé un procédé de fabrication d'un panneau acoustique, le procédé de fabrication comportant :
- une étape de réalisation au cours de laquelle une structure composite est réalisée,
- une étape de fourniture au cours de laquelle des inserts sont fournis et où chaque insert comporte une buse prenant la forme d'un cylindre creux avec un alésage traversant et un capuchon comprenant un pied sous la forme d'un cylindre et une coiffe sous la forme d'un cône, et où le pied est logé dans l'alésage,
- une étape de mise en place au cours de laquelle les inserts sont mis en place dans la structure composite par pénétration de la coiffe dans la structure composite de manière à ce que l'alésage débouche de part et d'autre de la structure composite,
- une étape de polymérisation au cours de laquelle la structure composite avec les inserts est polymérisée,
- une étape de retrait au cours de laquelle les capuchons sont retirés,
- une première étape d'assemblage au cours de laquelle une structure en nid d'abeilles est fixée à la structure composite polymérisée, et
- une deuxième étape d'assemblage au cours de laquelle une peau arrière est fixée à la structure en nid d'abeilles.

Un tel procédé de fabrication permet d'obtenir un panneau acoustique ayant des trous de très faible diamètre, en particulier inférieur à 1 mm, ce qui assure une meilleure atténuation des ondes acoustiques de faibles fréquences.

Avantageusement, l'étape de fourniture est précédée d'une étape de surmoulage au cours de laquelle la buse est surmoulée sur le pied.

L'invention propose également un insert pour la mise en œuvre du procédé de fabrication selon l'une des variantes précédentes et comportant une buse prenant la forme d'un cylindre creux avec un alésage traversant et un capuchon comprenant un pied sous la forme d'un cylindre et une coiffe sous la forme d'un cône, et où le pied est logé dans l'alésage.

L'invention propose également un panneau acoustique obtenu par un procédé de fabrication selon l'un des modes de réalisation précédents.

L'invention propose également une nacelle pour un moteur d'aéronef et comportant au moins un panneau acoustique selon la variante précédente.

L'invention propose également un aéronef comportant au moins une nacelle selon la variante précédente.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente une vue de côté d'un aéronef selon l'invention,
la Fig. 2 est une vue de côté et en coupe d'un panneau acoustique selon l'invention,
la Fig. 3 montre un insert avant mise en place dans une structure composite, et
la Fig. 4 illustre un algorithme d'un procédé de fabrication d'un panneau acoustique selon l'invention.

### EXPOSE DETAILLE DE MODES DE REALISATION

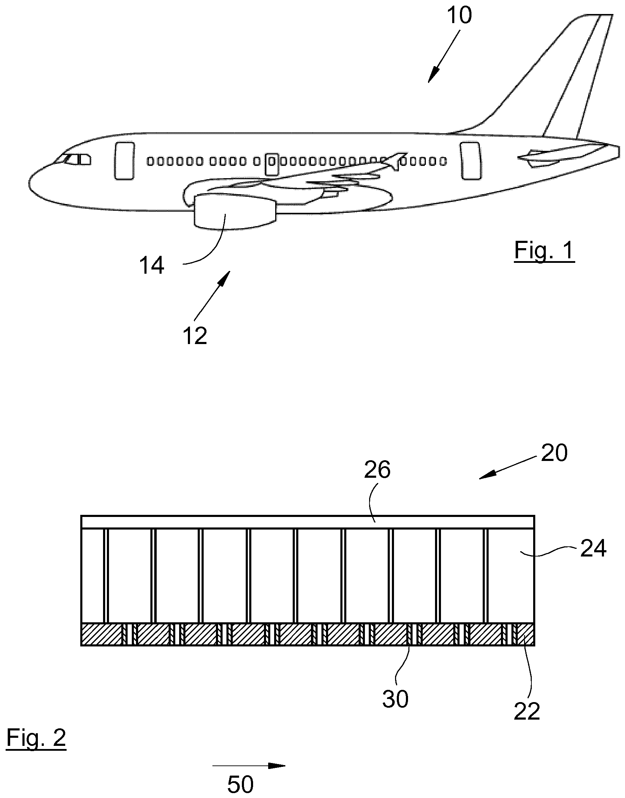

La Fig. 1 montre un aéronef 10 qui comporte au moins un système de propulsion 12 qui comporte un moteur, en particulier un turboréacteur double flux, et une nacelle 14 qui entoure le moteur.

La nacelle 14 intègre des panneaux acoustiques qui sont agencés autour du flux d'air qui traverse la nacelle 14.

La Fig. 2 montre la structure du panneau acoustique 20.

Le panneau acoustique 20 comporte une structure composite 22 qui est positionnée contre le flux d'air 50, une structure en nid d'abeilles 24 fixée à la structure composite 22 et une peau arrière 26 fixée à la structure en nid d'abeilles 24.

La fixation de la structure en nid d'abeilles 24 et de la peau arrière 26 s'effectue par collage.

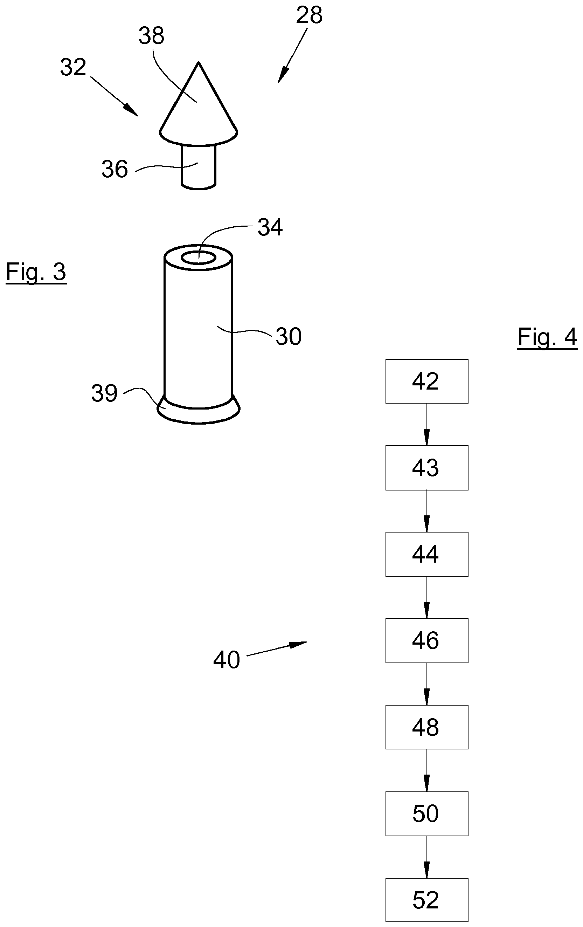

La Fig. 3 montre un insert 28 qui comporte une buse 30 et un capuchon 32. La buse 30 prend la forme d'un cylindre creux avec un alésage 34 traversant. Le capuchon 32 comprend un pied 36 sous la forme d'un cylindre et une coiffe 38 sous la forme d'un cône. Le diamètre du pied 36 est adapté au diamètre de l'alésage 34 pour permettre l'insertion du pied 36 dans l'alésage 34 ainsi que son retrait.

L'alésage 34 peut être en particulier de faible diamètre, en particulier inférieur à 1 mm.

La structure composite 22 comporte des buses 30 et chaque buse 30 est noyée dans la structure composite 22 de manière à ce que l'alésage 34 débouche de part et d'autre de la structure composite 22. La longueur de la buse 30 est ainsi au moins égale à l'épaisseur de la structure composite 22.

Lors de la fabrication de la structure composite 22, l'insert 28 est intégré dans la structure composite 22 puis le capuchon 32 est retiré pour laisser uniquement la buse 30 et ainsi libérer l'alésage 34. La mise en place de l'insert 28 s'effectue par pénétration de la coiffe 38 dans la structure composite 22 jusqu'à ce que le capuchon 32 ressorte de la structure composite 22 et que l'alésage 34 débouche de part et d'autre de la structure composite 22. Le retrait du capuchon 32 s'effectue par exemple en appliquant une force latérale qui permet de sortir le capuchon 32 de la buse 30.

La Fig. 4 montre un procédé de fabrication 40 du panneau acoustique 20. Le procédé de fabrication 40 comprend :
- une étape de réalisation 42 au cours de laquelle la structure composite 22 est réalisée,
- une étape de fourniture 43 au cours de laquelle des inserts 28 sont fournis et où chaque insert 28 comporte une buse 30 prenant la forme d'un cylindre creux avec un alésage 34 traversant et un capuchon 32 comprenant un pied 36 sous la forme d'un cylindre et une coiffe 38 sous la forme d'un cône, et où le pied 36 est logé dans l'alésage 34,
- une étape de mise en place 44 au cours de laquelle les inserts 28 sont mis en place dans la structure composite 22 par pénétration de la coiffe 38, c'est-à-dire du cône, dans la structure composite 22,
- une étape de polymérisation 46 au cours de laquelle la structure composite 22 avec les inserts 28 est polymérisée,
- une étape de retrait 48 au cours de laquelle les capuchons 32 sont retirés,
- une première étape d'assemblage 50 au cours de laquelle la structure en nid d'abeilles 24 est fixée à la structure composite 22 polymérisée, et
- une deuxième étape d'assemblage 52 au cours de laquelle la peau arrière 26 est fixée à la structure en nid d'abeilles 24.

La mise en place des inserts 28 avant la polymérisation évite la rupture des fibres composites de la structure composite 22 qui ne sont pas encore solidifiées.

Chaque insert 28 est mis en place manuellement ou à l'aide d'un outil approprié par exemple du type pistolet. La forme en cône de la coiffe 38 facilite la pénétration de l'insert 28 dans la structure composite 22.

La présence du capuchon 32 avant polymérisation évite que l'alésage 34 soit bouché par de la résine de la structure composite 22 lors de la polymérisation.

Pour assurer une meilleure tenue de la buse 30 dans la structure composite 22 et réduire les risques de migration de résine de la structure composite 22, la buse 30 comporte une base 39 élargie.

L'insertion du pied 36 dans l'alésage 34 peut s'effectuer manuellement si la buse 30 et le capuchon 32 sont fabriqués indépendamment l'un de l'autre. Mais préférentiellement, la buse 30 est réalisée par surmoulage sur le pied 36.

## Revendications

1. Procédé de fabrication (40) d'un panneau acoustique (20), le procédé de fabrication (40) comportant :
- une étape de réalisation (42) au cours de laquelle une structure composite (22) est réalisée,
- une étape de fourniture (43) au cours de laquelle des inserts (28) sont fournis et où chaque insert (28) comporte une buse (30) prenant la forme d'un cylindre creux avec un alésage (34) traversant et un capuchon (32) comprenant un pied (36) sous la forme d'un cylindre et une coiffe (38) sous la forme d'un cône, et où le pied (36) est logé dans l'alésage (34),
- une étape de mise en place (44) au cours de laquelle les inserts (28) sont mis en place dans la structure composite (22) par pénétration de la coiffe (38) dans la structure composite (22) de manière à ce que l'alésage (34) débouche de part et d'autre de la structure composite (22),
- une étape de polymérisation (46) au cours de laquelle la structure composite (22) avec les inserts (28) est polymérisée,
- une étape de retrait (48) au cours de laquelle les capuchons (32) sont retirés et les buses sont laissées en place,
- une première étape d'assemblage (50) au cours de laquelle une structure en nid d'abeilles (24) est fixée à la structure composite (22) polymérisée, et
- une deuxième étape d'assemblage (52) au cours de laquelle une peau arrière (26) est fixée à la structure en nid d'abeilles (24).

2. Procédé de fabrication (40) selon la revendication 1, **caractérisé en ce que** l'étape de fourniture (43) est précédée d'une étape de surmoulage au cours de laquelle la buse (30) est surmoulée sur le pied (36).

3. Insert (28) pour la mise en œuvre du procédé de fabrication (40) selon l'une des revendications 1 ou 2, et comportant une buse (30) prenant la forme d'un cylindre creux avec un alésage (34) traversant et un capuchon (32) comprenant un pied (36) sous la forme d'un cylindre et une coiffe (38) sous la forme d'un cône, et où le pied (36) est logé dans l'alésage (34).

4. Panneau acoustique (20) obtenu par un procédé de fabrication selon l'une des revendications 1 ou 2.

5. Nacelle (14) pour un moteur d'aéronef et comportant au moins un panneau acoustique (20) selon la revendication 4.

6. Aéronef (10) comportant au moins une nacelle selon la revendication 5.

## Patentansprüche

1. Fertigungsverfahren (40) einer Schalldämmungsplatte (20), wobei das Fertigungsverfahren (40) aufweist:
- einen Herstellungsschritt (42), während dessen eine Verbundstruktur (22) hergestellt wird,
- einen Bereitstellungsschritt (43), während dessen Einsätze (28) bereitgestellt werden und wobei jeder Einsatz (28) eine Düse (30), die die Form eines Hohlzylinders mit einer Durchgangsbohrung (34) annimmt, und eine Kappe (32) aufweist, die einen Fuß (36) in Form eines Zylinders und eine Haube (38) in Form eines Kegels enthält, und wobei der Fuß (36) in der Bohrung (34) untergebracht ist,
- einen Schritt des Einsetzens (44), während dessen die Einsätze (28) durch Eindringen der Haube (38) in die Verbundstruktur (22) so in die Verbundstruktur (22) eingesetzt werden, dass die Bohrung (34) zu beiden Seiten der Verbundstruktur (22) mündet,
- einen Polymerisationsschritt (46), während dessen die Verbundstruktur (22) mit den Einsätzen (28) polymerisiert wird,
- einen Entnahmeschritt (48), während dessen die Kappen (32) entfernt und die Düsen an Ort und Stelle gelassen werden,
- einen ersten Zusammenbauschritt (50), während dessen eine wabenförmige Struktur (24) an der polymerisierten Verbundstruktur (22) befestigt wird, und
- einen zweiten Zusammenbauschritt (52), während dessen eine hintere Haut (26) an der wabenförmigen Struktur (24) befestigt wird.

2. Fertigungsverfahren (40) nach Anspruch 1, **dadurch gekennzeichnet, dass** vor dem Bereitstellungsschritt (43) ein Aufformungsschritt liegt, während dessen die Düse (30) auf den Fuß (36) aufgeformt wird.

3. Einsatz (28) zur Durchführung des Fertigungsverfahrens (40) nach einem der Ansprüche 1 oder 2, und der eine Düse (30), die die Form eines Hohlzylinders mit einer Durchgangsbohrung (34) annimmt, und eine Kappe (32) aufweist, die einen Fuß (36) in Form eines Zylinders und eine Haube (38) in Form eines Kegels enthält, und wobei der Fuß (36) in der Bohrung (34) untergebracht ist.

4. Schalldämmungsplatte (20), die durch ein Fertigungsverfahren nach einem der Ansprüche 1 oder 2 erhalten wird.

5. Gondel (14) für einen Motor eines Luftfahrzeugs, die mindestens eine Schalldämmungsplatte (20) nach Anspruch 4 aufweist.

6. Luftfahrzeug (10), das mindestens eine Gondel nach Anspruch 5 aufweist.

## Claims

1. Production method (40) for an acoustic panel (20), the production method (40) comprising:
- a production step (42) during which a composite structure (22) is produced,
- a provision step (43) during which inserts (28) are provided and in which each insert (28) comprises a nozzle (30) in the form of a hollow cylinder with a through-bore (34) and a cap (32) which comprises a base (36) in the form of a cylinder and a cover (38) in the form of a cone, and in which the base (36) is accommodated in the bore (34),
- a positioning step (44) during which the inserts (28) are positioned in the composite structure (22) by means of penetration of the cover (38) into the composite structure (22) so that the bore (34) opens at one side and the other of the composite structure (22),
- a polymerisation step (46) during which the composite structure (22) with the inserts (28) is polymerised,
- a removal step (48) during which the caps (32) are removed and the nozzles are left in place,
- a first assembly step (50) during which a honeycomb structure (24) is fixed to the polymerised composite structure (22), and
- a second assembly step (52) during which a rear skin (26) is fixed to the honeycomb structure (24).

2. Production method (40) according to Claim 1, **characterized in that** the provision step (43) is preceded by an overmoulding step during which the nozzle (30) is overmoulded on the base (36).

3. Insert (28) for implementing the production method (40) according to either Claim 1 or Claim 2, and comprising a nozzle (30) in the form of a hollow cylinder with a through-bore (34) and a cap (32) which comprises a base (36) in the form of a cylinder and a cover (38) in the form of a cone, and in which the base (36) is accommodated in the bore (34).

4. Acoustic panel (20) obtained using a production method according to either Claim 1 or Claim 2.

5. Nacelle (14) for an aircraft engine and comprising at least one acoustic panel (20) according to Claim 4.

6. Aircraft (10) comprising at least one nacelle according to Claim 5.
